# EUROPEAN PATENT SPECIFICATION

(11) **EP 2 113 152 B1**
(45) Date of publication and mention of the grant of the patent: **08.04.2015**
(21) Application number: 08710072.3
(22) Date of filing: 18.02.2008
(51) Int. Cl.: H04L 29/06

(54) **A CONDITIONAL ACCESS SYSTEM**
SYSTEM MIT BEDINGTEM ZUGANG
SYSTÈME D'ACCÈS CONDITIONNEL

(30) Priority: 21.02.2007 EP 07102763
(43) Date of publication of application: 04.11.2009
(73) Proprietor: TP Vision Holding B.V., 1097 JB Amsterdam (NL)
(72) Inventor: KAAG, Bjorn, C., W., NL-5656 AE Eindhoven (NL); BERNSEN, Johannes, A., C., NL-5656 AE Eindhoven (NL); MUIJEN, Marinus, C., M., NL-5656 AE Eindhoven (NL); VLOT, Marnix, C., NL-5656 AE Eindhoven (NL)
(74) Representative: Busch, Patrick
(86) International application number: PCT/IB2008/050576
(87) International publication number: WO 2008/102295

(56) References cited:
- WO-A-98/56179
- ZHENG M ET AL: "A COMMON SMART-CARD-BASED CONDITIONAL ACCESS SYSTEM FOR DIGITAL SET-TOP BOXES" IEEE TRANSACTIONS ON CONSUMER ELECTRONICS, IEEE SERVICE CENTER, NEW YORK, NY, US, vol. 50, no. 2, 1 May 2004 (2004-05-01), pages 601-605, XP001225158 ISSN: 0098-3063

## Description

### BACKGROUND OF THE INVENTION

In conditional access audio and video delivery systems, the (audiovisual or other) data is usually delivered in protected form. Only selected client devices such as set-top boxes, digital televisions, personal computers or mobile phones, then can render, copy or otherwise use the data. Typically this involves descrambling or decrypting the incoming data. For security reasons these descrambling operations usually require the use of a smartcard or other separate conditional access module that is in possession of the right descrambling keys.

Most of these conditional access systems are built in compliance with the Digital Video Broadcasting (DVB) Common Interface (Cl) standard EN50221 and ETSI TS 101 699. Following the terminology of these standards, the client device is hereafter referred to as a "Host" and the smartcard or other conditional access module is referred to as a "CAM" (short for "conditional access module"). It will be appreciated that the present invention can also be used in conjunction with conditional access systems that operate in accordance with other standards or proprietary systems.

The CAM descrambles the incoming data and provides the result to the Host for further use. A concern with this approach is that the output from the CAM can be captured or diverted in the clear, which is undesirable.

To address this concern, consideration has been given to protecting the output of the CAM. If the CAM delivers the output in rescrambled form to the. Host, the clear data can no longer be captured or diverted from the transmission from CAM to Host. The key to be used for rescrambling is preferably established by the CAM and the Host together, which implies the Host and the module need to verify each other's authenticity. Such a protection scheme could become the subject of a new standard defined by DVB or a similar organization.

At the same time, there is a need to be backwards compatible. If either of the CAM and Host detects that the other does not support the above-mentioned protection scheme, it must revert to the existing standards.

### SUMMARY OF THE INVENTION

The present invention recognizes for the first time that this need for backwards compatibility introduces a security risk. The detection process can only be executed by the exchange of information between the CAM and the Host. This information necessarily is in the clear, because the CAM and the Host have no way to establish a secure channel. Such a secure channel is simply not defined in existing DVB CI standards. An attacker can now manipulate this exchange of information, e.g. by blocking requests for information or messages that initiate an authentication protocol.

The security risk is that the absence of an appropriate response can also be caused by the fact that the other party can only operate in accordance with existing DVB standards and does not support the protected exchange of data. The need for backwards compatibility dictates that the data is then to be delivered in the clear. The attacker can thus gain access to the data.

To solve this security risk, the invention provides a conditional access system as claimed in claim 1. This system is based on the insight that detection of a unique code embedded in the data stream is more robust than any exchange of information between CAM and Host to attempt to detect whether the protection scheme is supported or not. Based on this insight, the invention proposes that the Host and the conditional access module engage in an authentication protocol with each other upon detection of this unique code embedded in the input or output.

WO98/56179 discloses a system conditionally establishes a communication channel between two devices only if one device is authenticated by the other device. Authentication of the second device by the first device involves sending a message to the second device; receiving, from the second device, the message encrypted using a private key of the second device and a digital certificate having a public key of the second device; decrypting the digital certificate to obtain the public key, using the public key to decrypt the message and comparing the decrypted message to the message originally sent to the second device. That document does not disclose that the host and the conditional access module are configured to engage in an authentication protocol with each other upon detection of a code embedded in the incoming data stream or in the output stream.

Preferably the code is embedded by means of a watermark. Since the watermark does not have to carry any information, it can be a high quality, low visibility/audibility watermark that is difficult to remove. Watermarking schemes that satisfy these requirements are well known per se.

In an embodiment the conditional access module is configured to embed the code in the output before providing the output to the Host, and in that the Host is configured to initiate the authentication protocol with the conditional access module upon detecting the code embedded in the output. This embodiment allows the CAM to indicate its support for protected data communication by embedding the code in the output.

In this embodiment preferably the Host is further configured to abort the reception of the output upon detecting the code embedded in the output. Detecting the presence of the code indicates that the Host is communicating with a CAM that supports protected data communication. A transmission of the output in the clear then is not necessary and may even be indicative of tampering of communication between Host and CAM. Such a transmission therefore should be aborted, preferably as soon as possible.

In a further embodiment the conditional access module is configured to initiate the authentication protocol with the Host upon detecting the code embedded in the output. In this embodiment the code has been inserted prior to the reception of the scrambled data stream by the CAM. The code now serves as an indication that the output may only be provided to the Host after a successful authentication. Usually the output will then be provided in scrambled form.

In a variation of this further embodiment the conditional access module is configured to refrain from providing the output to the Host until the authentication protocol has successfully been completed.

In a yet further embodiment the conditional access module is configured to scramble the output using a key agreed upon in the authentication protocol and to supply the scrambled output to the Host. Many authentication protocols exist that provide the ability to agree upon a key. This key can then be used to rescramble the output before providing it to the Host, thereby protecting the data stream.

In an embodiment the Host is configured to embed a further code, unique for the Host, in the output provided by the conditional access module. This enables identification of the Host should the clear, unscrambled version of the output be made available without authorization.

Preferably the code is embedded in the output by means of a watermark. Watermarks are difficult to detect and even more difficult to remove without specific information on where the watermark resides. In some cases watermark detection requires knowledge of a specific key. Alternatively the code is embedded in the output by means of recording the code in a metadata field in the output. Other ways of embedding the code are also possible.

In an embodiment the host is configured to detect the embedded code in the input data stream. This has the advantage that detection of the embedded code can be implemented in the Host easily, since such detection requires little processing of the incoming data stream.

Preferably in this embodiment the embedded code indicates the presence of at least one information element in the incoming data stream, and in which the host is configured to restrict its interaction with the conditional access module upon detection of the embedded code and failure to retrieve the at least one information element from the output stream provided by the conditional access module to the host. The advantage of the above embodiment is that the Host can quickly detect the embedded code and later process the information whose presence is flagged. A tampered CAM cannot withhold this information because the Host knows to expect it. When an authentication element is used, the CAM cannot even manipulate it.

### BRIEF DESCRIPTION OF THE FIGURES

These and other aspects of the invention will be apparent from and elucidated with reference to the illustrative embodiments shown in the drawings, in which:
Fig. 1 schematically shows a conditional access system;
Fig. 2 schematically shows a first embodiment of this system;
Fig. 3 schematically shows a second embodiment of this system.

Throughout the figures, same reference numerals indicate similar or corresponding features. Some of the features indicated in the drawings are typically implemented in software, and as such represent software entities, such as software modules or objects.

### DETAILED DESCRIPTION OF PREFERRED EMBODIMENTS

The invention has application in any field where conditional access to data is desirable. This includes but is not limited to digital television and radio.

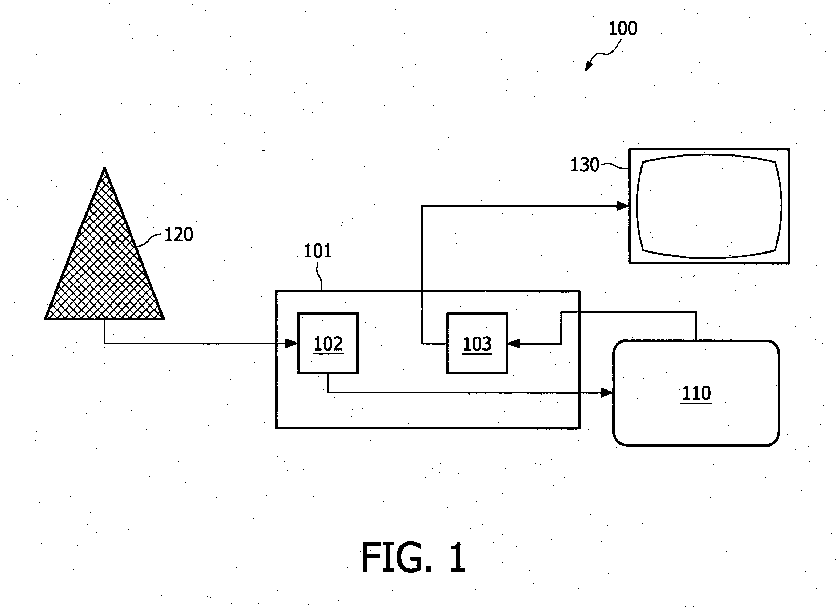

Fig. 1 schematically shows an embodiment of a conditional access system 100. The system comprises a Host 101 that is operatively coupled to a conditional access module or CAM 110. The Host 101 is shown in Fig. 1 as a set-top box that receives digital conditional access television signals from a headend 120 and provides an output television signal to display screen 130, but the skilled person will appreciate that many other embodiments are also possible. For example, the conditional access system 100 can be integrated by providing Host 101 as part of the display screen 130, e.g. in the context of an Integrated Digital Television or Integrated Digital TV set. Alternatively the Host 101 can be provided as part of a mobile phone or personal computer or any of many other devices. The digital conditional access signals can also comprise audio or data, and may be read from a storage medium or be received from the Internet or any other source.

The Host 101 comprises a receiver 102 that receives a scrambled data stream and supplies this scrambled data stream to the CAM 110. Preferably this scrambled data stream is comprised in an MPEG-2 transport stream, although of course other transport and/or encoding protocols or schemes can be used as well. The CAM 110 descrambles the scrambled data stream and provides a corresponding output to the Host 101, where a decoding module 103 decodes the output, e.g. by converting MPEG-2 program streams to audiovisual signals, and supplies the decoded output to the display screen 130. These operations are well known by themselves and will not be elaborated upon further.

A preferred embodiment adheres to the DVB CI standards mentioned above, although in principle any conditional access system and any scrambling/descrambling or encryption/decryption mechanism can be used with the present invention. What matters is that the CAM 110 operates in accordance with the right mechanism so that appropriate output corresponding to the input data can be provided to the Host 101.

Alternatively, instead of being scrambled, the incoming data stream may be provided in the clear. In that case no descrambling is necessary of course before embedding the code.

In accordance with the present invention, the Host 101 and the CAM 110 are configured to engage in an authentication protocol with each other upon detection of a code embedded in the output. The presence of the code is an indication that the authentication protocol is to be performed.

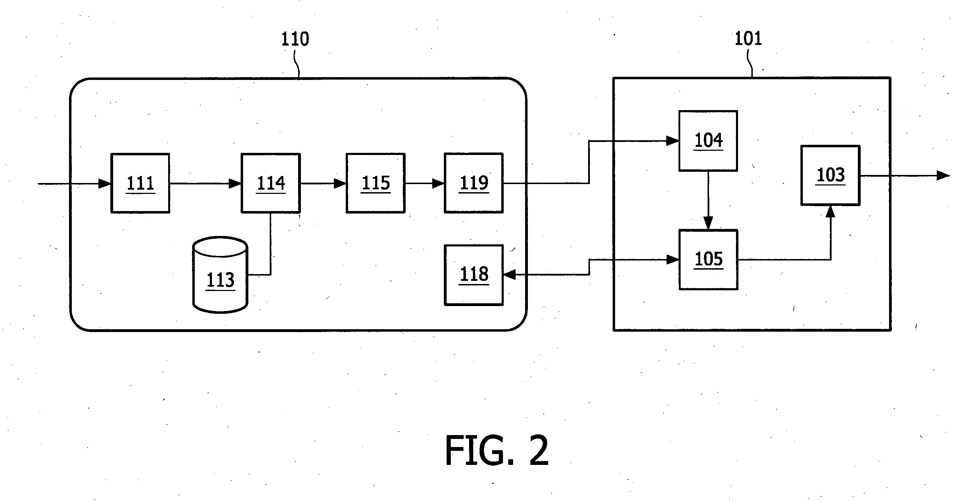

In a first embodiment, shown in Fig. 2, the CAM 110 comprises an embedding module 115 that embeds the code in the output before providing the output to the Host. Preferably the code is embedded by means of a watermark, although the code can also be provided in metadata, such as a table in DVB-CI systems. Embedding the code may require the use of a watermarking key or secret, depending on the watermarking algorithm used. Further, embedding the code usually requires that the scrambled input data is descrambled first.

As shown in Fig. 2, the embedding module 115 is coupled to an output of descrambling module 114 that in turn is coupled to a receiving module 111 by means of which the scrambled data is received from the Host 101. The descrambling module 114 usually has access to a storage medium 113 with the necessary descrambling or decryption keys. Alternatively the necessary keys can be provided from a smartcard or other device, or be downloaded from an external location. The necessary keys can be provided in conjunction with or even in a digitally signed object that indicates one or more permitted (licensed) activities regarding the output.

The output of the embedding module 115 is coupled to an input of transmitting module 119 which provides the descrambled output with the embedded code to the Host 101. The Host 101 in this embodiment comprises a code detector 104 that processes the output to detect the presence or absence of the embedded code in the descrambled output. Detection of the embedded code may require the above-mentioned watermarking key or secret. If the embedded code is detected, the code detector 104 sends a signal to an authentication module 105 to initiate the authentication protocol with a corresponding authentication module 118 in the CAM 110.

While the protocol is being executed, the delivery, decoding and/or further processing of the output may or may not be suspended. This choice depends on many factors, such as the time necessary to fully execute the protocol. If this takes at most a few seconds, it may be acceptable to continue delivery, decoding and further processing of the output while the protocol is being executed. This ensures the viewing experience of the user is not interrupted if the protocol is successful. If the protocol cannot be successfully completed, the user will only get access to a few seconds' worth of information.

If the protocol is successfully completed, the authentication module 105 signals to the decoding module 103 that decoding and further processing of the output may commence or continue.

Preferably the Host 101 aborts the reception of the cleartext output upon detecting the code embedded in the output. This reduces the possibility of unauthorized access to this cleartext output. The output can be subsequently provided in encrypted or scrambled form instead.

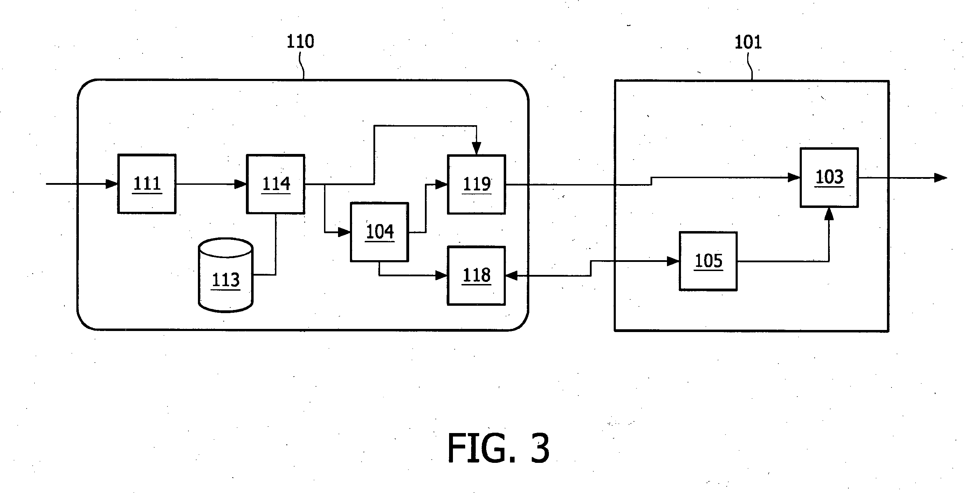

In a second embodiment, shown in Fig. 3, the CAM 110 comprises the code detector 104, which is coupled to the authentication module 118. In this embodiment the CAM 110 initiates the authentication protocol with the Host upon detecting the code embedded in the descrambled data provided by the descrambling module 114. After a successful authentication the output will be provided to the Host 101.

In this embodiment the assumption is that the code has been embedded prior to the reception of the data stream by the CAM. A preferred way of realizing this is to cause a headend (in DVB terminology) or other transmitter to embed the code. Alternatively the code may be embedded by the provider of the audio or video data involved.

One option for this embodiment is to configure the transmitting module 119 to refrain from providing the output to the Host 101 until the authentication protocol has successfully been completed. This ensures that the output will not be provided to an unauthorized Host 101. This can be realized by e.g. configuring the code detector 104 to signal to the transmitting module 119 when output to the Host 101 may be provided.

Another option is to configure the CAM 110 to scramble the output using a key agreed upon in the authentication protocol and to supply the scrambled output to the Host. This of course requires the use of an authentication protocol that also provides for key agreement or key establishment. Possible options are Diffie-Hellman and Guillou-Quisquater, although other protocols may also be used of course.

Several options exist in this embodiment for the case that the authentication is not successful, or the Host does not respond to requests to initiate the authentication protocol. A first option is to not supply any output at all. A second option is to supply a degraded, lower-quality version of the output. For example, the video quality may be reduced from e.g. High Definition to classic television quality, or only part of all video frames may be provided. Audio quality can be reduced in similar ways. The audio could even be omitted altogether, thus providing a video-only output.

Operations may be restricted to only so-called 'Free-to-air' content, only content that was provided in unscrambled form, or other content for which the desire of protection is low. Such unscrambled or 'free-to-air' content may indicate that retransmission is permitted only if the content is scrambled before retransmission. In such a case, the output of such content can be blocked when the autentication is not successful.

Another option is to provide the CAM 110 with an embedding module (not shown) by which a unique code can be embedded in the output before the output is provided to the Host 101. While now the output may be processed in unauthorized ways, a distribution of the output can now at least be traced to this particular CAM.

Yet another option is to scramble the output using a key agreed upon in the authentication protocol and to supply the scrambled output to the Host 101, as already mentioned above.

In addition or alternative to any of the above, the CAM 110 can revoke the Host 101, e.g. by adding an identifier for the Host 101 to a blacklist or removing its identifier from a whitelist, or by reporting the identifier for the Host 101 to a trusted third party who subsequently adds the identifier to a blacklist or removes the identifier from a whitelist.

In a further embodiment the Host 101 comprises a further code embedder (not shown) that embeds a further code, unique for the Host, in the output provided by the CAM 110. Such a further unique code may be e.g. a serial number provided in a read-only memory in the Host 101. This again enables tracing in the case of unauthorized further distribution of the output.

In an alternative embodiment the code has been embedded in the incoming data stream. As explained above with reference to Fig. 1, the incoming data stream is first received by the Host 101 and then passed to the CAM 110. In this embodiment the Host 101 detects the embedded code *before the data scream is passed to the CAM 110.* If the code is detected, the Host 101 engages in the authentication protocol mentioned above with the CAM 110.

In this embodiment preferably the embedded code comprises a message with an authentication element allowing authentication of the message as originating from an authorized service provider, such as a digital signature or message authentication code (MAC) created by the service provider.

Preferably in this embodiment the embedded code comprises one or more information elements such as a version number, a flag to indicate blacklist or whitelist information is available in the stream, a flag to indicate copy management information or rights data is available in the stream or a flag to indicate rescrambling of the data is required. If any of the flags are detected, the Host 101 expects the indicated information to be available in the stream as returned by the transmitting module 119 in the CAM 110.

The embedded flags may be provided at certain predefined locations in the incoming data stream, for example every few seconds or following every table or frame of a particular type. This facilitates easier detection of the embedded flags.

A tampered CAM 110 cannot remove the blacklist, whitelist, copy management or other information in the stream because the Host 101 expects this information in the output. If the information is provided with an authentication element, such as a digital signature or message authentication code (MAC) created by the service provider, the information cannot be manipulated either.

Of course the Host 101 could also directly extract the blacklist, whitelist, copy management or other information from the incoming stream. This however has the disadvantage that extracting such information is complex and time-consuming.

If the code is present but no information that is supposed to be present as indicated by the flag(s) is found in the output, the Host 101 should restrict its interaction with the conditional access module in a manner similar to the options mentioned above for the case that the authentication between Host 101 and CAM 110 fails.

It should be noted that the above-mentioned embodiments illustrate rather than limit the invention, and that those skilled in the art will be able to design many alternative embodiments without departing from the scope of the appended claims. For example, although the invention has been presented above in the context of a DVB-style conditional access system, the invention can equally well be used in systems that provide more complex forms of digital rights management, such as the Open Mobile Alliance (OMA) Digital Rights Management version 2.0. This may apply in particular when DRM is used for systems with one-way communication, such as television or radio broadcast.

As another example, the code detector 104 may attempt to detect the code at multiple intervals. This allows the detector 104 to ignore a failure to detect the code at some of the multiple detection attempts. It also allows the Host 101 and CAM 110 to periodically re-authenticate each other.

Although the word "scrambling" has been used in the above, this indicates any transformation of a signal that renders the signal unintelligible without special knowledge, such as a key. In DVB-compliant conditional access systems the Common Scrambling Algorithm would be used. DRM systems often use encryption schemes such as AES, 3DES or DES.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer.

In the device claim enumerating several means, several of these means can be embodied by one and the same item of hardware. The mere fact that certain measures are recited in mutually different dependent claims does not indicate that a combination of these measures cannot be used to advantage.

## Claims

1. A conditional access system (100) comprising a host (101) configured to receive an incoming data stream and to supply this incoming data stream to a conditional access module (110), the conditional access module being configured to process the incoming data stream and to provide a corresponding output stream to the host (101), **characterized in that** the host (101) and the conditional access module (110) are configured to engage in an authentication protocol with each other upon detection of a code embedded in the incoming data stream or in the output stream.

2. The system of claim 1, in which the conditional access module (110) is configured to embed the code in the output stream before providing the output stream to the host (101), and in that the host is configured to initiate the authentication protocol with the conditional access module upon detecting the code embedded in the output stream.

3. The system of claim 2, in which the host (101) is further configured to abort the reception of the output stream upon detecting the code embedded in the output stream.

4. The system of claim 1, in which the conditional access module (110) is configured to initiate the authentication protocol with the host upon detecting the code embedded in the output stream.

5. The system of claim 4, in which the conditional access module (110) is configured to refrain from providing the output stream to the host (101) until the authentication protocol has successfully been completed.

6. The system of claim 4, in which the conditional access module (110) is configured to revoke the host upon a failure to successfully authenticate the host (101).

7. The system of claim 1, in which the conditional access module (110) is configured to scramble the output stream using a key agreed upon in the authentication protocol and to supply the scrambled output stream to the host (101).

8. The system of claim 1, in which the host (101) is configured to embed a further code, unique for the host, in the output stream provided by the conditional access module (110).

9. The system of claim 1, in which the code has been embedded in the output stream by means of a watermark.

10. The system of claim 1, in which the host (101) is configured to detect the embedded code in the input data stream.

11. The system of claim 1, in which the embedded code indicates the presence of at least one information element in the incoming data stream, and in which the host (101) is configured to restrict its interaction with the conditional access module (110) upon detection of the embedded code and failure to retrieve the at least one information element from the output stream provided by the conditional access module (110) to the host (101).

12. The system of claim 1, in which an authentication element for the embedded code is provided together with the embedded code.

## Patentansprüche

1. System für bedingten Zugriff (100) mit einem Host (101), der eingerichtet ist, einen einlaufenden Datenstrom zu empfangen und diesen einlaufenden Datenstrom einem Bedingtzugriffsmodul (110) zuzuführen, wobei das Bedingtzugriffsmodul eingerichtet ist, den einlaufenden Datenstrom zu verarbeiten und dem Host (101) einen entsprechenden Ausgabestrom bereitzustellen, **dadurch gekennzeichnet, dass** der Host (101) und das Bedingtzugriffsmodul (110) eingerichtet sind, bei Erfassung eines Codes, der in den einlaufenden Datenstrom oder in den Ausgabestrom eingebettet ist, sich miteinander an einem Authentisierungsprotokoll zu beteiligen.

2. System nach Anspruch 1, in dem das Bedingtzugriffsmodul (110) eingerichtet ist, den Code in den Ausgabestrom einzubetten, bevor der Ausgabestrom dem Host (101) bereitgestellt wird, und wobei der Host eingerichtet ist, bei Erfassung eines Codes, der in den Ausgabestrom eingebettet ist, das Authentisierungsprotokoll mit dem Bedingtzugriffsmodul einzuleiten.

3. System nach Anspruch 2, in dem der Host (101) ferner eingerichtet ist, beim Erfassen des Codes, der in den Ausgabestrom eingebettet ist, den Empfang des Ausgabestroms abzubrechen.

4. System nach Anspruch 1, in dem das Bedingtzugriffsmodul (110) eingerichtet ist, beim Erfassen des Codes, der in den Ausgabestrom eingebettet ist, das Authentisierungsprotokoll mit dem Host einzuleiten.

5. System nach Anspruch 4, in dem das Bedingtzugriffsmodul (110) eingerichtet ist, vom Bereitstellen des Ausgabestroms an den Host (101) abzusehen, bis das Authentisierungsprotokoll erfolgreich abgeschlossen wurde.

6. System nach Anspruch 4, in dem Bedingtzugriffsmodul (110) eingerichtet ist, den Host bei einem Fehlschlag der erfolgreichen Authentisierung des Hosts (101) nicht zu bedienen.

7. System nach Anspruch 1, in dem das Bedingtzugriffsmodul (110) eingerichtet ist, den Ausgabestrom unter Verwendung eines Schlüssels, der in dem Authentisierungsprotokoll vereinbart wurde, zu verschlüsseln und dem Host (101) den verschlüsselten Ausgabestrom zuzuführen.

8. System nach Anspruch 1, in dem der Host (101) eingerichtet ist, in den Ausgabestrom, der durch das Bedingtzugriffsmodul (110) bereitgestellt wurde, einen weiteren Code einzubetten, der für den Host eindeutig ist.

9. System nach Anspruch 1, in dem der Code mithilfe eines Wasserzeichens in den Ausgabestrom eingebettet wurde.

10. System nach Anspruch 1, in dem der Host (101) eingerichtet ist, den eingebetteten Code in dem eingegebenen Datenstrom zu erfassen.

11. System nach Anspruch 1, in dem der eingebettete Code das Vorhandensein mindestens eines Informationselements in dem einlaufenden Datenstrom anzeigt und in dem der Host (101) eingerichtet ist, seine Wechselwirkung mit dem Bedingtzugriffsmodul (110) einzuschränken, wenn der eingebettete Code erfasst wird und das Abrufen des mindestens einen Informationselements, das dem Host (101) durch den Bedingtzugriffsmodul (110) bereitgestellt wurde, aus dem Ausgabestrom fehlschlägt.

12. System nach Anspruch 1, in dem zusammen mit dem eingebetteten Code für den eingebetteten Code ein Authentisierungselement bereitgestellt wird.

## Revendications

1. Système d'accès conditionnel (100) comprenant un hôte (101) configuré pour recevoir un flux de données entrant et pour fournir ce flux de données entrant à un module d'accès conditionnel (110), le module d'accès conditionnel étant configuré pour traiter le flux de données entrant et pour fournir un flux de sortie correspondant à l'hôte (101), **caractérisé en ce que** l'hôte (101) et le module d'accès conditionnel (110) sont configurés pour s'engager dans un protocole d'authentification l'un avec l'autre à la détection d'un code intégré au flux de données entrant ou aux flux de sortie.

2. Système selon la revendication 1, dans lequel le module d'accès conditionnel (110) est configuré pour intégrer le code au flux de sortie avant de fournir le flux de sortie à l'hôte (101), et l'hôte est configuré pour lancer le protocole d'authentification avec le module d'accès conditionnel à la détection du code intégré au flux de sortie.

3. Système selon la revendication 2, dans lequel l'hôte (101) est en outre configuré pour abandonner la réception du flux de sortie à la détection du code intégré au flux de sortie.

4. Système selon la revendication 1, dans lequel le module d'accès conditionnel (110) est configuré pour lancer le protocole d'authentification avec l'hôte à la détection du code intégré au flux de sortie.

5. Système selon la revendication 4, dans lequel le module d'accès conditionnel (110) est configuré pour interdire la fourniture du flux de sortie à l'hôte (101) jusqu'à l'exécution réussie du protocole d'authentification.

6. Système selon la revendication 4, dans lequel le module d'accès conditionnel (110) est configuré pour révoquer l'hôte en cas d'échec d'authentification réussie de l'hôte (101).

7. Système selon la revendication 1, dans lequel le module d'accès conditionnel (110) est configuré pour brouiller le flux de sortie en utilisant une clé convenue dans le protocole d'authentification et pour fournir le flux de sortie brouillé à l'hôte (101).

8. Système selon la revendication 1, dans lequel l'hôte (101) est configuré pour intégrer un autre code, unique pour l'hôte, au flux de sortie fourni par le module d'accès conditionnel (110).

9. Système selon la revendication 1, dans lequel le code est intégré au flux de sortie au moyen d'un filigrane.

10. Système selon la revendication 1, dans lequel l'hôte (101) est configuré pour détecter le code intégré au flux de données d'entrée.

11. Système selon la revendication 1, dans lequel le code intégré indique la présence d'au moins un élément d'information dans le flux de données entrant, et dans lequel l'hôte (101) est configuré pour restreindre son interaction avec le module d'accès conditionnel (110) à la détection du code intégré et à l'échec de l'extraction de l'au moins un élément d'information du flux de sortie fourni par le module d'accès conditionnel (110) à l'hôte (101).

12. Système selon la revendication 1, dans lequel l'élément d'authentification pour le code intégré est fourni avec le code intégré.
